# EUROPÄISCHE PATENTSCHRIFT

(11) **EP 3 323 903 B1**
(45) Veröffentlichungstag und Bekanntmachung des Hinweises auf die Patenterteilung: **07.08.2019**
(21) Anmeldenummer: 16200062.4
(22) Anmeldetag: 22.11.2016
(51) Int. Cl.: C22C 33/02, C22C 38/22, C22C 38/24, B21B 27/02, B22F 3/105, B22F 3/15

(54) **PULVERMETALLURGISCH HERGESTELLTER STAHLWERKSTOFF, VERFAHREN ZUR HERSTELLUNG EINES BAUTEILS AUS EINEM SOLCHEN STAHLWERKSTOFF UND AUS DEM STAHLWERKSTOFF HERGESTELLTES BAUTEIL**
STEEL MATERIAL PREPARED BY POWDER METALLURGY, METHOD FOR PRODUCING A COMPONENT FROM SUCH A STEEL MATERIAL AND COMPONENT PRODUCED FROM THE STEEL MATERIAL
MATÉRIAU EN ACIER FABRIQUÉ PAR MÉTALLURGIE DES POUDRES, PROCÉDÉ DE PRODUCTION D'UN COMPOSANT À PARTIR D'UN TEL MATÉRIAU EN ACIER ET COMPOSANT FABRIQUÉ EN MATÉRIAU EN ACIER

(43) Veröffentlichungstag der Anmeldung: 23.05.2018
(73) Patentinhaber: Deutsche Edelstahlwerke Specialty Steel GmbH & Co. KG, 58452 Witten (DE)
(72) Erfinder: Hill, Horst, 47929 Grefrath (DE); van Bennekom, André, 57234 Wilnsdorf (DE)
(74) Vertreter: Cohausz & Florack

(56) Entgegenhaltungen:
- EP-A1- 0 515 018
- EP-B1- 0 773 305
- US-A- 4 249 945

## Beschreibung

Die Erfindung betrifft einen Stahlwerkstoff, der pulvermetallurgisch hergestellt ist.

Ebenso betrifft die Erfindung ein Verfahren zum Herstellen eines solchen Stahlwerkstoffs.

Schließlich betrifft die Erfindung auch Bauteile, die aus einem Stahlwerkstoff der erfindungsgemäßen Art hergestellt sind.

Speziell zielt die Erfindung auf einen Stahlwerkstoff ab, der für die Herstellung von Bauteilen geeignet ist, die im praktischen Einsatz höchsten Flächenbelastungen ausgesetzt sind und gleichzeitig schnell bewegt werden. Ein Beispiel für solche Bauteile sind Walzführungsrollen, die in Maschinen zum Drahtwalzen eingesetzt werden. An diesen Rollen wird der zu walzende und mit einer hohen Fördergeschwindigkeit bewegte Draht im heißen Zustand bei Temperaturen von mehr als 1000 °C geführt. Aufgrund seiner hohen Temperatur bildet sich auf dem Draht eine Zunderschicht. Neben der hohen Temperatur und den hohen dynamischen Belastungen, denen sie aufgrund ihrer mit der hohen Fördergeschwindigkeit des Drahts einhergehenden hohen Drehgeschwindigkeiten ausgesetzt sind, sind die Walzführungsrollen daher an ihren mit dem Draht in Berührung kommenden Flächen auch hohen abrasiven Belastungen ausgesetzt.

Damit sie diesem Belastungskollektiv standhalten können, werden an den Verschleißwiderstand, insbesondere den Widerstand gegen abrasiven Verschleiß, die Korrosionsbeständigkeit, den Widerstand gegen Thermoschock-Beanspruchung und das Gewicht von Stählen, aus denen Walzführungsrollen und andere im praktischen Einsatz vergleichbar belastete Bauteile hergestellt werden, hohe Anforderungen gestellt.

Es sind verschiedene Versuche bekannt, diesem Anforderungsprofil gerecht zu werden. So ist in der EP 0 773 305 B1 ein verschleiß- und korrosionsbeständiger, pulvermetallurgischer Werkzeugstahl beschrieben, der für die Herstellung von Bauteilen bestimmt ist, die zur Verarbeitung von verstärkten Kunststoffen und anderen abschleifenden und korrosiven Materialien verwendet werden. Der Stahl weist neben Eisen (in Gew.-%) einen Mn-Gehalt von 0,2 - 2,0 %, einen P-Gehalt von max. 0,1 %, einen S-Gehalt von max. 0,1 %, einen Si-Gehalt von max. 2,0 %, einen Cr-Gehalt von 11,5 - 14,5 %, einen Mo-Gehalt von max. 3,0 %, einen V-Gehalt von 8,0 - 15,0 %, einen N-Gehalt von 0,03 - 0,46 % und einen C-Gehalt auf, der bei 1,47 - 3,77 % liegen soll. Die Gehalte an C, Cr, Mo, V und N sind dabei über zwei Formeln so miteinander verknüpft, dass einerseits die Bildung von Ferrit im Gefüge des aus dem Stahl gefertigten Bauteils vermieden wird und andererseits um die Bildung übermäßiger Mengen an Rest-Austenit während der Wärmebehandlung zu verhindern, die das Bauteil im Zuge seiner Herstellung durchläuft. Ebenso soll über die durch die Formeln bestimmte Zusammensetzung eine optimierte Kombination aus Metall-Verschleiß-, Abrieb- und Korrosionsbeständigkeit erhalten werden.

Eine andere Gruppe von pulvermetallurgisch erzeugten Stahlwerkstoffen für die Herstellung von Bauteilen der hier in Rede stehenden Art ist beispielsweise in der US 4,249,945 A beschrieben. Diese Stähle weisen in einer bevorzugten Ausgestaltung eine Stahlmatrix, die aus 0,1 - 1 Gew.-% Mn, bis zu 2 Gew.-% Si, 4,5 - 5,5 Gew.-% Cr, 0,8 -1,7 Gew.-% Mo, bis zu 0,14 Gew.-% S, 8 -10,5 Gew.-% V, 2,2 -2,6 Gew.-% C, Rest Eisen und unvermeidbaren Verunreinigungen, besteht, auf und enthalten dabei 13,3 - 17,3 Vol.-% Vanadium-Karbide. Der Stahl erreicht eine Härte von bis zu 63 HRC.

Aus der EP 0 515 018 A1 sind schließlich vorlegierte vanadiumreiche Partikel eines Kaltarbeitsstahls und Verfahren zu deren Herstellung bekannt. Die Teilchen bestehen aus einer Kaltarbeitsstahllegierung mit einer Vanadiumcarbiddispersion vom MC-Typ mit einer Carbidteilchengröße, die im Wesentlichen vollständig unter 6 µm liegt, wobei der Gehalt der Vanadiumdispersion in den Partikeln 18,5 - 34,0 Vol .-% beträgt. Die Partikel werden durch Zerstäuben einer geschmolzenen Werkzeugstahllegierung bei einer Temperatur über 2910 °F und durch schnelles Abkühlen der zerstäubten Legierung hergestellt.

Vor dem Hintergrund des voranstehend erläuterten Standes der Technik ergab sich die Aufgabe, einen Stahlwerkstoff zu schaffen, der eine für die Herstellung von Bauteilen, die im praktischen Einsatz hohen mechanischen, korrosiven, thermischen und abrasiven Belastungen ausgesetzt sind, weiter optimierte Eigenschaftskombination bietet.

Ebenso sollte ein Verfahren zur Herstellung von Bauteilen aus einem solchen Stahl genannt werden.

Schließlich sollten Bauteile angegeben werden, für deren Herstellung der erfindungsgemäße Stahl besonders geeignet ist.

In Bezug auf den Stahl hat die Erfindung diese Aufgabe durch den gemäß Anspruch 1 beschaffenen Stahl gelöst.

Die erfindungsgemäße Lösung der voranstehend in Bezug auf das Verfahren gestellten Aufgabe besteht darin, dass bei der Herstellung von Bauteilen aus einem erfindungsgemäßen Stahl mindestens die in Anspruch 12 genannten Arbeitsschritte durchlaufen werden.

Schließlich eignet sich erfindungsgemäßer Stahl in besonderer Weise zur Herstellung von Bauteilen, die im praktischen Einsatz Bewegungen mit hoher Beschleunigung oder Geschwindigkeit ausführen und dabei insbesondere hohen Flächen- und Temperaturbelastungen ausgesetzt sind. Beispiele für solche Bauteile sind Walzführungen für Maschinen für die Drahterzeugung, aber auch andere Werkzeuge und sonstige Bauteile, von denen nicht nur eine hohe Standfestigkeit bei mechanischer Belastung und Verschleißbeständigkeit, sondern auch ein optimiertes Verhalten unter der Wirkung von hohen dynamischen Kräften gefordert wird. Typische Beispiele hierfür sind Kolbenbolzen und Stößelstangen.

Vorteilhafte Ausgestaltungen der Erfindung sind in den abhängigen Ansprüchen angegeben und werden nachfolgend wie der allgemeine Erfindungsgedanke im Einzelnen erläutert.

Der erfindungsgemäße Stahlwerkstoff ist pulvermetallurgisch hergestellt und weist folgende Zusammensetzung auf (in Gew.-%):

| | | | |
|---|---|---|---|
| C: | 3,9 | - | 5,0 %, |
| Si: | 0,3 | - | 2,0 %, |
| Mn: | 0,3 | - | 2,0 %, |
| P: | 0 | - | <0,035 %, |
| S: | 0 | - | <0,35 %, |
| N: | 0 | - | <0,12 %, |
| Cr: | 11,0 | - | 15,0 %, |
| Mo: | 0,5 | - | 2,0 %, |
| V: | 13,5 | - | 16,5 %, |

jeweils optional ein Element oder mehrere Elemente aus der Gruppe "Nb, Ni, Co, W", wobei der Gehalt an Elementen "Ni, Co, W" jeweils höchstens 1,0 % und der Gehalt an Nb höchstens 2,0 % beträgt,
und als Rest Eisen und unvermeidbare Verunreinigungen.

Dabei können zur Maximierung der mechanischen Eigenschaften in der in diesem Fall in der voranstehend angegebenen erfindungsgemäßen Weise zusammengesetzten Stahlmatrix optional Hartstoffpartikel in Gehalten von bis zu 30 Gew.-% vorhanden sein.

Bei den betreffenden Hartstoffpartikeln kann es sich insbesondere um Titan-Karbid-Partikel handeln.

Der erfindungsgemäße Stahl ist derart zusammengesetzt, dass er bei einer minimierten Dichte neben einer guten Verschleißbeständigkeit und einer damit einhergehend hohen Lebensdauer eine maximierte Beständigkeit gegen extreme Temperaturwechsel und eine ebenso optimierte Korrosionsbeständigkeit besitzt.

Wenn im vorliegenden Text Angaben zu Legierungsgehalten von Stählen und Stahlwerkstoffen gemacht werden, beziehen diese sich jeweils auf das Gewicht, sofern nicht anders ausdrücklich angegeben.

Bei einem erfindungsgemäßen Stahlwerkstoff sind vor allem die Gehalte an C, Cr und V so miteinander kombiniert, dass eine optimierte Härtbarkeit und damit einhergehend maximierte Festigkeit und Verschleißbeständigkeit erzielt wird.

Kohlenstoff ist im erfindungsgemäßen Stahl in Gehalten von 3,9 - 5,0 Gew.-% vorhanden, um die Bildung von harten, verschleißbeständigen Karbiden mit in dem Stahl ebenfalls vorhandenen Vanadium, Chrom und Molybdän zu ermöglichen und um durch Martensitbildung die Härte der Metallmatrix in der Grundmatrix des Gefüges eines aus dem erfindungsgemäßen Stahl geformten Bauteils zu erhöhen. Um diese Effekte zu erreichen, sind mindestens 3,9 Gew.-% C erforderlich. Besonders sicher lässt sich die positive Wirkung von Kohlenstoff im erfindungsgemäßen Stahl nutzen, wenn mindestens 4,2 Gew.-% C vorhanden ist. Bei C-Gehalten von mehr als 5,0 Gew.-% kann sich die Korrosionsbeständigkeit deutlich verschlechtern. Dies kann besonders sicher dadurch verhindert werden, dass der C-Gehalt auf höchstens 4,6 Gew.-% beschränkt wird. Darüber hinaus kann ein deutlich über 5 Gew.-% liegender C-Gehalt auch die Stabilisierung von Restaustenit nach dem Härten bedeuten. Diese Phasen sind deutlich weicher als der Martensit, womit sich auch die Verschleißbeständigkeit reduziert. Der C-Gehalt eines erfindungsgemäßen Stahls, der für die erfindungsgemäßen Zwecke besonders geeignet ist, liegt daher bei höchstens 4,5 Gew.-%.

Silizium wird einerseits bei der Erschmelzung der Vormaterialien, die als Bestandteil des für die erfindungsgemäße Herstellung von Bauteilen vorgesehenen, erfindungsgemäß legierten Stahllegierungspulvers sind, zur Desoxidation verwendet. Zudem wird durch die Anwesenheit von Silizium die Kohlenstoffaktivität erhöht und führt so zu einer Senkung der Schmelztemperatur. Ohne die gezielte Zugabe von mindestens 0,3 Gew.-% Si, insbesondere mindestens 0,7 Gew.-% Si, wären höhere C-Gehalte nötig. Durch den gesenkten Schmelzpunkt wird wiederum der Verdüsungsprozess erleichtert. Silizium reduziert zudem die Viskosität der Metallschmelze, was ebenfalls zur Vereinfachung des Verdüsungsprozesses beiträgt. Gleichzeitig steigert Silizium die Durchhärtbarkeit des Stahlwerkstoffes, da die Umwandlungsnasen im ZTU-Diagramm zu längeren Zeiten verschoben werden. Die Festigkeit des Austenits auf Härtetemperatur wird durch den gelösten Anteil an Si erhöht, womit die höhere Stabilität des Austenits erklärt und längere Abkühldauern ermöglicht werden können. Diese Effekte werden bei Si-Gehalten von bis zu 2,0 Gew.-%, insbesondere bis zu 1,5 Gew.-%, erreicht. Zu hohe Gehalte an Si würden zu einer Stabilisierung des Ferrits führen, wodurch der nach dem Härten vorhandene Anteil an Martensit im Gefüge des Stahls vermindert und damit auch die Härte und Verschleißbeständigkeit des erfindungsgemäßen Stahlwerkstoffs abnehmen würde.

Mangan ist im erfindungsgemäßen Stahlwerkstoff vorhanden, um die Verdüsbarkeit des Stahls bei der Herstellung des Stahlpulvers und seine Härte zu optimieren. So wird durch die Anwesenheit ausreichender Gehalte an Mn ähnlich wie durch die Anwesenheit von Si der Schmelzpunkt des Stahls gesenkt und die Viskosität der Metallschmelze gesenkt, so dass auch die gezielte Zugabe von Mn zur Vereinfachung des Verdüsungsprozesses beiträgt. Gleichzeitig steigert Mangan ebenfalls die Durchhärtbarkeit des Stahlwerkstoffes. Ebenso trägt der gelöste Anteil an Mn zur Stabilisierung des Austenits bei. Zudem bindet Mn Schwefel durch Bildung von MnS ab, wodurch die Gefährdung von Heißrissen reduziert und die Zerspanbarkeit verbessert wird. Diese Effekte werden bei Mn-Gehalten von mindestens 0,3 Gew.-%, insbesondere mindestens 0,7 Gew.-%, und Mn-Gehalten von bis zu 2,0 Gew.-%, insbesondere bis zu 1,5 Gew.-%, betriebssicher erreicht. Zu hohe Gehalte an Mangan könnten zum einen die austenitische Phase soweit stabilisieren, dass die Weichglühdauer deutlich erhöht würde. Zum anderen könnte durch zu hohe Mn-Gehalte die austenitische Phase auch soweit stabilisiert werden, dass nach dem Härten Restaustenit im Gefüge verbleibt. Diese Gefügestruktur wäre deutlich weicher als Martensit, wodurch die Härte und Verschleißbeständigkeit abnehmen würden. Als besonders praxisgerecht erweisen sich Mn-Gehalte eines erfindungsgemäßen Stahlwerkstoffs von etwa 1,2 Gew.-%.

Chrom dient im erfindungsgemäßen Stahl in Kombination mit Mo und V zur Einstellung der angestrebt hohen Anlassbeständigkeit, Korrosionsbeständigkeit und Härtbarkeit. Hierzu sind im erfindungsgemäßen Stahlwerkstoff mindestens 11,0 Gew.-% Cr, insbesondere mindestens 12,0 Gew.-%, vorgesehen, wobei sich die vorteilhaften Wirkungen von Cr dadurch besonders betriebssicher nutzen lassen, dass der Cr-Gehalt auf mindestens 12,5 Gew.-% eingestellt wird. Zu hohe Cr-Gehalte würden bewirken, dass sich mehr Cr-Karbide bilden. Durch die Bildung von Cr-Karbiden würde jedoch C abgebunden, wodurch die Martensitbildung reduziert würde, so dass die angestrebte hohe Härte des Martensits nicht mehr erreicht werden könnte. Bei über die erfindungsgemäß vorgegebene Obergrenze deutlich hinaus erhöhten Cr-Gehalten würde zudem die ferritische Phase stabilisiert, wodurch ebenfalls die geforderte Härte und Verschleißbeständigkeit nicht erreicht würde. Daher ist erfindungsgemäß der maximale Gehalt an Cr auf 15,0 Gew.-%, insbesondere höchstens 14,0 Gew.-%, beschränkt, wobei sich Cr-Gehalte von bis zu 13,5 Gew.-% in der Praxis als besonders geeignet herausgestellt haben. Der Cr-Gehalt eines erfindungsgemäßen Stahlwerkstoffs, der für die erfindungsgemäßen Zwecke besonders geeignet ist, liegt dementsprechend im Bereich von 13,0 Gew.-%.

Molybdän erhöht wie Chrom die Korrosionsbeständigkeit, Härtbarkeit und Anlassbeständigkeit von aus erfindungsgemäßem Stahl hergestellten Bauteilen, wenn Mo-Gehalte von mindestens 0,5 Gew.-%, insbesondere mindestens 0,9 Gew.-%, vorhanden sind. Zu hohe Gehalte an Mo würden jedoch ebenfalls die ferritische Phase stabilisieren. Daher ist der Höchstgehalt an Mo bei erfindungsgemäßem Stahl auf 2,0 Gew.-%, insbesondere max. 1,5 Gew.-%, beschränkt. Der Mo-Gehalt eines erfindungsgemäßen Stahls, der für die erfindungsgemäßen Zwecke besonders geeignet ist, liegt dementsprechend vorzugsweise im Bereich von 1,2 Gew.-%.

Vanadium ist im erfindungsgemäßen Stahl in Gehalten von 13,5 Gew.-% bis 16,5 Gew.-% vorhanden, um eine optimierte Verschleißbeständigkeit durch Bildung von großen Mengen an vanadiumreichen Karbiden oder Karbonitriden zu erreichen. Zudem beteiligt sich Vanadium verstärkt an der Bildung von Karbiden bei dem Anlassen im Sekundärhärtemaximum. Optimale Wirkungen der Anwesenheit von V lassen sich dabei dadurch erzielen, dass mindestens 14,5 Gew.-% V im erfindungsgemäßen Stahl vorhanden sind. Indem der V-Gehalt auf 16,5 Gew.-%, insbesondere höchstens 16,0 Gew.-% oder höchstens 15,5 Gew.-% beschränkt wird, lässt sich betriebssicher vermeiden, dass zu viel Kohlenstoff durch Karbidbildung abgebunden wird. Durch eine solche übermäßige Abbindung würde C zur Bildung von Martensit fehlen, so dass der Anteil an Martensit nach dem Härten reduziert wäre. Die Härte und Verschleißbeständigkeit würden dementsprechend zurückgehen. Der V-Gehalt eines erfindungsgemäßen Stahls, der für die erfindungsgemäßen Zwecke besonders geeignet ist, liegt deshalb typischerweise bei 15,0 Gew.-%.

Niob ist optional in Gehalten von bis zu 2,0 Gew.-% im erfindungsgemäßen Stahl vorhanden. Nb hat eine sehr ähnliche Wirkweise wie Vanadium. Es beteiligt sich vor allem an der Bildung von harten und verschleißbeständigen Monokarbiden. Daher können, jeweils bezogen auf ihre Gehalte in Atom-%, Nb und V im Verhältnis 1:1 wechselweise ausgetauscht werden, wenn sich dies beispielsweise im Hinblick auf die Verfügbarkeit dieser Legierungselemente als zweckmäßig herausstellt.

Nickel kann in Gehalten von bis zu 1,0 Gew.-% im erfindungsgemäßen Stahlwerkstoff optional vorhanden sein, um ähnlich wie Mn den Austenitanteil zu stabilisieren und damit die Härtbarkeit zu verbessern. So sichert die Anwesenheit von Ni, dass bei der jeweiligen Härtetemperatur tatsächlich Austenit gebildet wird und kein unerwünschtes Ferrit im Gefüge des Stahls entsteht. Allerdings erhöht ein zu hoher Ni-Gehalt die für die Martensitbildung nötige Abkühldauer. Gleichzeitig sollten keine zu hohen Ni-Gehalte vorhanden sein, da hier die Gefahr besteht, dass nach dem Härten Restaustenit im Gefüge vorliegt. Sofern Ni zugegeben werden soll, beträgt daher der Ni-Gehalt bevorzugt mindestens 0,2 Gew.-%, wobei sich bei Ni-Gehalten von bis zu 0,4 Gew.-% optimierte Wirkungen der Anwesenheit von Ni einstellen.

Kobalt kann ebenfalls optional in Gehalten von bis zu 1,0 Gew.-% im erfindungsgemäßen Stahlwerkstoff vorhanden sein. Ähnlich wie Nickel hat Co eine stabilisierende Wirkung auf die Austenitbildung und die Härtetemperatur. Im Gegensatz zu Nickel oder Mangan senkt Co aber nicht die Endtemperatur des Martensits, weswegen seine Anwesenheit weniger kritisch im Hinblick auf die Bildung von Restaustenit ist. Zudem erhöht Kobalt die Warmfestigkeit. Sofern diese positiven Einflüsse durch die Zugabe von Co genutzt werden sollen, erweisen sich Gehalte von mindestens 0,3 Gew.-% Co als besonders zweckmäßig, wobei optimierte Wirkungen bei Co-Gehalten von bis zu 0,5 Gew.-% eintreten.

Wolfram kann wie Co und Ni dem Stahl in Gehalten von bis zu 1,0 Gew.-% optional zugegeben werden. Wolfram erhöht vor allem die Anlassbeständigkeit und beteiligt sich vor allem bei dem Anlassen im Sekundärhärtemaximum an der Karbidbildung. Durch die Anwesenheit von W werden die Anlasstemperaturen zu höheren Temperaturen verschoben. Ähnlich dem Kobalt wird zudem die Warmfestigkeit durch W erhöht. Allerdings würden zu hohe W-Gehalte die ferritische Phase ebenfalls stabilisieren. Sofern die positiven Einflüsse von W genutzt werden sollen, erweisen sich daher Gehalte von mindestens 0,3 Gew.-% W als besonders zweckmäßig, wobei optimierte Wirkungen bei W-Gehalten von bis zu 0,5 Gew.-% eintreten.

Der jeweils verbleibende Rest des Stahls besteht aus Eisen und unvermeidbaren Verunreinigungen, die aufgrund des Herstellungsverfahrens oder der Ausgangsmaterialien, aus denen die Bestandteile des Stahllegierungspulvers gewonnen werden, in den Stahl gelangen, dort jedoch keine Wirkung in Bezug auf die Eigenschaften haben.

Schwefel kann in Gehalten von bis zu 0,35 Gew.-% im Stahlwerkstoff vorhanden sein, um die Zerspanbarkeit zu verbessern. Bei höheren S-Gehalten werden die Eigenschaften des erfindungsgemäß zusammengesetzten Stahlwerkstoffs dagegen verschlechtert. Um die günstige Wirkung der Anwesenheit von S sicher nutzen zu können, können im erfindungsgemäßen Stahlwerkstoff mindestens 0,035 Gew.-% vorhanden sein. Soll dagegen die Zerspanbarkeit durch die gezielte Zugabe von S nicht verbessert werden, kann der S-Gehalt dementsprechend auf weniger als 0,035 Gew.-% beschränkt werden.

Zu den unvermeidbar vorhandenen Verunreinigungen zählen auch Gehalte an P von bis zu 0,035 Gew.-%.

Stickstoff wird dem erfindungsgemäßen Stahlwerkstoff ebenfalls nicht gezielt zulegiert, sondern gelangt aufgrund der Stickstoffaffinität der Legierungsbestandteile beim Verdüsungsprozess in den Stahlwerkstoff. Um negative Einflüsse von N auf die Eigenschaften des Stahlwerkstoffs zu vermeiden, sollte der Gehalt an N weniger als 0,12 Gew.-% betragen, insbesondere auf maximal 0,1 Gew-% beschränkt sein.

Die Dichte von erfindungsgemäßem Stahlwerkstoff liegt typischerweise im Bereich von 6,6 - 7,2 g/cm³, wobei sie im Fall der Abwesenheit von Hartstoffpartikeln bei 7,0 - 7,2 g/cm³ liegt und sich durch die Zugabe von Hartstoffpartikeln auf 6,6 - 7,0 g/cm³ einstellen lässt. Seine minimierte Dichte und sein dadurch bedingt geringes Gewicht macht erfindungsgemäßen Stahl insbesondere für die Herstellung solcher Bauteile geeignet, die im praktischen Einsatz wiederholend einer schnellen Beschleunigung ausgesetzt sind und bei denen sich infolgedessen eine geringere Massenträgheit besonders günstig auswirkt.

Die pulvermetallurgische Herstellung erlaubt es, die Dichte und Verschleißbeständigkeit von erfindungsgemäßem Stahl durch gezielte Zugabe von Hartphasen mit niedriger Dichte wahlweise im Sinne der jeweiligen Anwendung weiter zu optimieren, sofern dies im Hinblick auf die jeweils angestrebte Eigenschaft gewünscht wird. Hier hat es sich gezeigt, dass sich die Gebrauchseigenschaften von erfindungsgemäßem Stahl dadurch weiter steigern lassen, dass ihm bis zu 30 Gew.-% Hartstoffpartikel zugegeben werden, die beim fertig erzeugten Stahl in seine in der voranstehend erläuterten Weise zusammengesetzte Stahlmatrix eingebettet sind. Die Hartstoffe liegen dabei wie das die Stahlmatrix bildende Stahllegierungspulver im Ausgangszustand als Pulver vor.

Bei den Hartstoffen, in der Fachsprache auch "Hartphasen" genannt, kann es sich um Karbide, Nitride, Oxide oder Boride handeln. Zur Gruppe der geeigneten Hartstoffe gehören demnach Al₂O₃, B₄C, SiC, ZrC, VC, NbC, TiC, WC, W₂C, Mo₂C, V₂C, BN, Si₃N₄, NbN oder TiN.

Dabei hat sich für die erfindungsgemäßen Zwecke TiC als besonders geeignet herausgestellt. Titankarbid weist eine Härte von 3200 HV auf und erhöht so die Härte und Verschleißbeständigkeit des Stahls besonders effektiv. Gleichzeitig ist TiC chemisch beständig und hat keinen negativen Einfluss auf die Korrosionsbeständigkeit. Ebenso wirkt sich die geringe Dichte von TiC vorteilhaft aus.

Um die vorteilhafte Anwesenheit der Hartstoffpartikel zu nutzen, können im erfindungsgemäßen Stahlwerkstoff mindestens 2,5 Gew.-%, insbesondere mindestens 5,0 Gew.-% Hartstoffpartikel vorhanden sein. Dabei erweisen sich Hartstoffgehalte von bis zu 25 Gew.-% als im Hinblick auf die angestrebten Eigenschaften besonders günstig. Die hier genannten Gehalte an Hartstoffpartikeln in einem erfindungsgemäßen Stahlwerkstoff erweisen sich insbesondere dann als zweckmäßig, wenn es sich bei dem Hartstoff um Titankarbid TiC handelt.

Erfindungsgemäßer Stahl erreicht nach einem Härten und Anlassen auch ohne Anwesenheit von Hartstoffen Härtewerte von mindestens 60 HRC, wobei typische Härtewerte im Bereich von 62 - 65 HRC liegen.

Bei Anwesenheit von Hartstoffpartikeln im erfindungsgemäßen Stahl lässt sich die Härte weiter steigern. Sie liegt dann typischerweise im Bereich von 63 - 68 HRC.

Ein erfindungsgemäßer Stahl, der sich im praktischen Versuch besonders bewährt hat und die voranstehend für ihn typischen Legierungsbestandteile aufweist, hat beispielsweise ohne die Zugabe von Hartstoffpartikeln eine Dichte von 7,1 g/cm³ und eine Härte von 63 HRC, wogegen seine Dichte bei Anwesenheit von Hartstoffpartikeln 6,9 g/cm³ beträgt und seine Härte 65 HRC hat.

Nach einem in der Regel für die mechanische Bearbeitung durchgeführten Weichglühen liegt die typische Weichglühhärte von erfindungsgemäßem Stahlwerkstoff, der keine Hartstoffpartikel enthält, bei 43 - 53 HRC, wogegen seine Weichglühhärte bei Anwesenheit von Hartstoffpartikeln typischerweise 46 - 55 HRC beträgt.

Bei der Erzeugung von erfindungsgemäßen Bauteilen aus einem erfindungsgemäßen Stahl werden mindestens folgende Arbeitsschritte durchlaufen:
a) Es wird ein Stahllegierungspulver bereitgestellt, das aus (in Gew.-%) 3,9 - 5,0 % C, 0,3 - 2,0 % Si, 0,3 - 2,0 % Mn, < 0,035 % P, < 0,35 % S, < 0,12 % N, 12,0 -15,0 % Cr, 0,5 - 2,0 % Mo, 13,5 - 16,5 % V, jeweils optional einem Element oder mehreren Elementen aus der Gruppe "Nb, Ni, Co, W", wobei der Gehalt an Elementen "Ni, Co, W" jeweils höchstens 1,0 % und der Gehalt an Nb höchstens 2,0 % beträgt, und als Rest aus Eisen und unvermeidbaren Verunreinigungen besteht.
b) Optional wird das Stahllegierungspulver mit Hartstoffpartikeln mit der Maßgabe vermischt, dass der Gehalt an Hartstoffpartikeln an der erhaltenen Stahllegierungspulver-Hartstoffpartikel-Mischung bis zu 30 Gew.-% beträgt.
c) Optional wird das Stahllegierungspulver oder die Stahllegierungspulver-Hartstoff-Mischung getrocknet.
d) Aus dem Stahllegierungspulver oder der Stahllegierungspulver-Hartstoff-Mischung wird durch ein Sinterverfahren, insbesondere durch Heiß-Isostatisches-Pressen, oder ein additives Verfahren, ein festes Halbzeug gebildet.
e) Das erhaltene Halbzeug wird zu dem Bauteil fertig bearbeitet.

In Bezug auf die praktische Durchführung und die Ausgestaltungen der Arbeitsschritte a) bis e) des erfindungsgemäßen Verfahrens gelten dabei folgende Hinweise:

### Arbeitsschritt a)

Die Pulverherstellung kann in konventioneller Weise beispielsweise durch Gasverdüsen oder jedes andere geeignete Verfahren erfolgen. Hierzu kann das Legierungspulver beispielsweise durch Gas- oder Wasserverdüsen oder eine Kombination aus diesen beiden Verdüsungsverfahren erzeugt werden. Denkbar ist dabei eine Verdüsung einer in erfindungsgemäßer Weise legierten Schmelze zu dem Legierungspulver.

Alternativ ist es aber auch möglich, die Legierungselemente des Stahllegierungspulvers zunächst einzeln in Pulverform in Mengen bereitzustellen, die den für das jeweilige Legierungselement vorgesehenen Gehaltsanteilen entsprechen und diese Pulvermengen dann zu dem erfindungsgemäß zusammengesetzten Stahllegierungspulver zu vermischen.

Erforderlichenfalls werden aus den Pulverpartikeln für die erfindungsgemäße Weiterverarbeitung durch Sieben diejenigen selektiert, die einen mittleren Durchmesser von weniger als 500 µm besitzen, wobei sich Pulver mit mittleren Korngrößen von weniger als 250 µm, insbesondere von weniger als 180 µm, als besonders geeignet erwiesen haben.

Unabhängig von der Art und Weise seiner Erzeugung weist das erfindungsgemäß bereitgestellte Legierungspulver optimaler Weise eine Schüttdichte von 2 - 6 g/cm3 (bestimmt nach DIN EN ISO 3923-1) und eine Klopfdichte von 3 - 8 g/cm3 (bestimmt nach DIN EN ISO 3953) auf.

### Arbeitsschritt b)

Sofern dies vorgesehen ist, wird das im Arbeitsschritt a) erzeugte Stahllegierungspulver mit dem jeweils ausgewählten Hartstoffpulver vermischt. Die Menge an zugemischten Hartstoffpartikeln wird dabei unter Berücksichtigung der voranstehend in Bezug auf die optimierte Auswahl des Gehalts an Hartstoffen gegebenen Hinweise bestimmt.

### Arbeitsschritt c)

Sofern erforderlich, kann das in Arbeitsschritt a) und dem optional durchgeführten Arbeitsschritt b) erhaltene Legierungspulver in konventioneller Weise getrocknet werden, um Rückstände von Flüssigkeiten und sonstigen flüchtigen Bestandteilen zu entfernen, die den anschließenden Formgebungsprozess behindern könnten,

### Arbeitsschritt d)

Aus dem optional Hartstoffpartikel enthaltenden Legierungspulver wird nun ein Rohteil (Halbzeug) geformt. Hierzu kann das Legierungspulver in an sich bekannter Weise durch ein geeignetes Sinterverfahren, insbesondere durch Heiß-Isostatisches-Pressen ("HIPen"), in die jeweilige Form gebracht werden. In der Regel wird das HIPen durchgeführt werden. Typische Drücke beim HIPen liegen im Bereich von 900 - 1500, insbesondere 1000 bar, bei einer Temperatur von 1050 - 1250°C, insbesondere 1080 - 1200 °C. Im Zuge des Härtens bildet sich im Gefüge des Stahlwerkstoffs Austenit, VC und Cr-Karbid.

Alternativ kann aus dem erfindungsgemäß beschaffenen und bereitgestellten Legierungspulver auch in einem additiven Verfahren das jeweilige Bauteil erzeugt werden. Unter dem Begriff "additiv" werden alle Herstellverfahren zusammengefasst, bei denen ein Werkstoff zur Erzeugung eines Bauteils hinzugefügt wird, wobei dieses Hinzufügen in der Regel schichtweise erfolgt. "Additive Herstellverfahren", die in der Fachsprache oft auch als "generative Verfahren" bezeichnet werden, stehen damit im Gegensatz zu den klassischen subtraktiven Fertigungsverfahren wie den spanenden Verfahren (z.B. Fräsen, Bohren und Drehen), bei denen Material abgetragen wird, um dem jeweils herzustellenden Bauteil seine Form zu verleihen. Das additive Bauprinzip ermöglicht es, geometrisch komplexe Strukturen herzustellen, die mit konventionellen Fertigungsverfahren, wie den schon genannten spanabhebenden Verfahren oder Urformverfahren (Gießen, Schmieden) nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv). Nähere Definitionen der Verfahren, die unter dem Oberbegriff "Additive Verfahren" zusammengefasst sind, finden sich beispielsweise in den VDI-Richtlinien 3404 und 3405.

### Arbeitsschritt e)

Das nach dem Arbeitsschritt d) erhaltene Halbzeug bedarf noch einer Fertigbearbeitung, um ihm einerseits die gewünschten Gebrauchseigenschaften und andererseits die geforderte Endform zu verleihen. Die Fertigbearbeitung umfasst beispielsweise eine mechanische, insbesondere spanabhebende Bearbeitung des Halbzeugs, und eine Wärmebehandlung, die aus einem Härten und Anlassen bestehen kann.

Nachfolgend wird die Erfindung anhand von Ausführungsbeispielen näher erläutert:
In der voranstehend erläuterten Weise erfindungsgemäß zusammengesetzte Legierungspulver werden beispielsweise durch Heiß-Isostatisches-Pressen oder ein anderes geeignetes Sinterverfahren zu einem Rohteil (Halbzeug) geformt. Hierzu kann das jeweilige Legierungspulver in eine geeignete Form, beispielsweise eine zylindrische Kapsel, gefüllt und dann bei typischen Drücken von 900 - 1500 bar (90 - 150 MPa), insbesondere 1000 bar (100 MPa), bei einer Temperatur von 1050 - 1250°C, insbesondere 1150 °C, über eine ausreichende Dauer gehalten werden, bis ein fester Körper entstanden ist. Typischerweise liegt der Druck beim Heiß-Isostatischen-Pressen im Bereich von 102 - 106,7 MPa und die Erwärmung auf die typischerweise 1150 - 1153 °C betragende Zieltemperatur, die über eine Dauer von typischerweise 200 - 300 min, insbesondere 245 min, gehalten wird, erfolgt ebenso typischerweise mit einer Aufheizrate von 3 K/min - 10 K/min.

Auf die Erzeugung des Halbzeugs folgt die Wärmebehandlung. Dabei wird das jeweilige Halbzeug mit einer Aufheizgeschwindigkeit von typischerweise 5 K/min auf eine Härtetemperatur (Austenitisierungstemperatur) von 1080 - 1200 °C, typischerweise 1125 °C, erwärmt, auf der es so lange gehalten wird, bis es vollständig durchgewärmt ist. Typischerweise werden hierzu 30 - 60 min benötigt. Anschließend werden so erwärmte Halbzeuge abgeschreckt. Dabei werden sie mit einem geeigneten Abschreckmedium, beispielsweise mit Wasser, Öl, einem Polymerbad, bewegter oder ruhender Luft oder, sofern die Abkühlung im Vakuumofen vorgenommen wird, mit gasförmigem Stickstoff, innerhalb von 5- 30 Min auf Raumtemperatur abgekühlt. Insbesondere bei großen Halbzeugen kann es zweckmäßig sein, die Erwärmung auf die Härtetemperatur in mehreren Vorwärmstufen, z.B. 400 °C, 600 °C und 800 °C oder eine Vorwärmtemperatur im Bereich von 600 - 800°C, durchzuführen, um eine gleichmäßige Durchwärmung sicherzustellen.

Um Reaktionen mit der Umgebungsatmosphäre zu vermeiden, kann in ebenso an sich bekannter Weise das Härten in einem Vakuumofen durchgeführt werden. Jedoch ist dies keine Voraussetzung für den Erfolg der erfindungsgemäßen Vorgehensweise.

Nach dem Härten kann ein Anlassen durchgeführt werden, bei dem das Halbzeug über eine Dauer von beispielsweise 90 min auf der jeweiligen, typischerweise 490 - 510 °C betragenden Anlasstemperatur gehalten wird. Die Anlassbedingungen werden dabei in an sich bekannter Weise in Abhängigkeit von der jeweiligen Härtetemperatur und dem gewünschten Härteniveau, d.h. der gewünschten Festigkeit, gewählt. Die Aufheiz- und Abkühlgeschwindigkeiten liegen beim Anlassen in der Regel in der Größenordnung von 10 K/min. Im Gegensatz zum Härten sind die Aufheiz- und Abkühlgeschwindigkeiten beim Anlassen unkritisch. Durch das Anlassen entspannt sich der spröde Martensit durch Diffusion von Kohlenstoff. Dieser bildet zusammen mit z.B. V, Cr und Mo die sogenannten "Anlasskarbide". Dadurch steigt die Zähigkeit. Gleichzeitig nimmt die Festigkeit und Härte des Stahlwerkstoffs nur geringfügig ab, da diese Eigenschaften durch die Karbidbildung wieder erhöht werden.

Da es in der Regel bei solchen Legierungssystemen einen schmalen Temperaturbereich (ca. 50°C grob zwischen 450 und 650°C) gibt, spricht man von Sekundärhärtemaximum, da Temperaturen unter- oder oberhalb davon eine geringere Härte bedeuten.

Unter Anwendung der voranstehend erläuterten allgemeinen Vorgehensweise bei der praktischen Erzeugung von erfindungsgemäßen Stahlwerkstoffen und daraus hergestellten Bauteilen sind folgende Versuche durchgeführt worden:
Für die Erzeugung von Probebauteilen wurden zwei erfindungsgemäße Legierungen V15 und V15_MMC erzeugt, deren Zusammensetzungen in Tabelle 1 angegeben sind. Der Stahlwerkstoff V15 enthält demnach keine Hartstoffpartikel, wogegen beim Stahlwerkstoff V15_MMC in einer gleich dem Stahlwerkstoff V15 zusammengesetzten Stahlmatrix zusätzlich 5 Gew.-% TiC-Hartstoffpartikel enthalten sind.

Die Stahlwerkstoffe V15 und V15_MMC sind pulvermetallurgisch hergestellt worden.

Dazu sind in an sich bekannter, oben bereits erläuterter Weise durch Verdüsen Stahllegierungspulver mit der in Tabelle 1 für den Stahlwerkstoff V15 angegebenen Zusammensetzung erzeugt worden. Der mittlere Durchmesser der Partikel der Legierungspulver betrug weniger als 250 µm.

Bei dem Stahlwerkstoff V15_MMC ist das für den Stahlwerkstoff V15 hergestellte Legierungspulver anschließend zusätzlich mit den ebenfalls pulverförmig und entsprechend kleiner Partikelgröße vorliegenden TiC-Hartstoffpartikeln vermischt worden.

Die entsprechend zusammengesetzten V15- und V15_MMC-Legierungspulver sind durch Heiß-Isostatisches-Pressen zu Zylinderkörpern verfestigt worden. Dazu ist das jeweilige Legierungspulver in zylindrische Kapseln gefüllt worden. Anschließend sind die in die Kapseln gefüllten Pulver mit einer Aufheizrate von 3 - 10 K/min und bei Drücken von 102 - 106,7 MPa auf eine Zieltemperatur von 1150 - 1153 °C erwärmt worden, auf der sie jeweils für eine Haltezeit von 245 min gehalten worden sind. Nach dem Ende der Haltezeit sind die als Halbzeug erhaltenen festen Zylinderstücke mit einer Abkühlgeschwindigkeit von 3-10 K/min auf Raumtemperatur abgekühlt worden.

Zwei aus dem Stahlwerkstoff V15 bestehende Halbzeug-Proben V15a und V15b und zwei aus dem Stahlwerkstoff V15_MMC bestehende Halbzeug-Proben V15_MMC_a und V15_MMC_b sind jeweils einer Wärmebehandlung unterzogen worden, deren Parameter in Tabelle 2 angegeben sind.

Dabei sind die Proben V15_a und V15_MMC_a jeweils mit einer Aufheizgeschwindigkeit von ca. 5 K/min im Vakuumofen auf eine Härtetemperatur (Austenitisierungstemperatur) AT erwärmt worden, bei der sie über eine Haltedauer von jeweils 60 min gehalten worden sind.

Nach Ablauf der Haltedauer sind die Proben V15_a und V15_MMC_a noch im Vakuumofen mit gasförmigem Stickstoff abgeschreckt worden, der mit 3,5 bar aufgebracht worden ist.

Um den Einfluss einer Anlassbehandlung auf die Härte zu überprüfen, ist an den so gehärteten Proben V15_a und V15_MMC_a die vor dem Anlassen vorhandene Härte HRC ("HRC_v") bestimmt worden, deren Mittelwerte in Tabelle 2 angegeben sind.

Anschließend sind die Proben V15_a und V15_MMC_a einer Anlassbehandlung unterzogen worden. Dazu sind sie mit einer Aufheizrate von jeweils ca. 10 K/min auf eine Anlasstemperatur ST erwärmt worden, auf der sie über eine Dauer von St gehalten worden sind, bevor sie mit einer Abkühlrate von ebenfalls ca. 10 K/min wieder auf Raumtemperatur abgekühlt worden sind. Anschließend wurde diese Anlassbehandlung einmal wiederholt, um optimale Anlassergebnisse zu erhalten.

Die Proben V15_b und V15_MMC_b sind dagegen einem Weichglühen unterzogen worden, bei dem sie jeweils mit 10 K/min auf eine Weichglühtemperatur von 900 °C aufgeheizt worden sind, bei der sie über 8 Stunden gehalten worden sind. Anschließend erfolgte eine langsame Abkühlung im abgeschalteten Ofen auf Raumtemperatur.

An den so angelassenen oder weichgeglühten Proben V15_a, V15_b sowie V15_MMC_a und V15_MMC_b ist die nach dem Anlassen vorliegende Härte HRC ("HRC_n") bestimmt worden, deren Mittelwerte ebenfalls in Tabelle 2 angegeben sind.

Die Dichte ρ der aus dem Stahlwerkstoff V15 bestehenden Proben lag im Mittel bei 7,1 g/cm³, wogegen sie bei den aus dem Stahlwerkstoff V15_MMC bestehenden Proben 6,9 g/cm³ betrug.

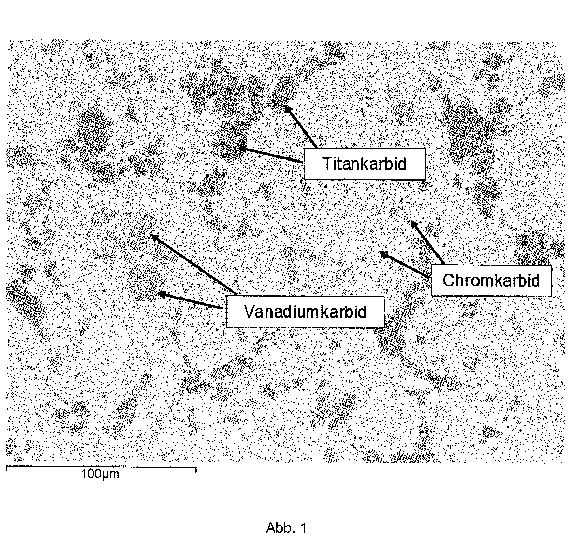

In Abbildung 1 ist eine elektronenmikroskopisch gewonnene Abbildung eines Schliffbilds der aus dem Stahlwerkstoff V15_MMC bestehenden Probe wiedergegeben. Es zeigen sich deutlich ausgeprägte Vanadiumkarbide (mittelgrau), die in Folge der C- und V-Gehalte entstanden sind, und in Kombination mit den gesondert zugegebenen Titankarbiden (dunkelgrau) und den ebenfalls in Folge der Legierung und Wärmebehandlung entstandenen Cr-Karbiden (hellgrau) gleichmäßig verteilt in die Stahlmatrix eingebettet sind.

Bei den Legierungen V15 und V15_MMC kann durch Variation der V- und C-Gehalte die Härte eingestellt werden.

Für eine weichere Variante V14 und V14_MMC sind dazu der C-Gehalt jeweils im Bereich von 4,0 - 4,4 Gew.-% und der V-Gehalt im Bereich von 13,5 - 14,5 Gew.% eingestellt worden. In der voranstehend für die Beispiele V15_a und V15_MMC_a erläuterten Weise aus der Variante V14 und der Variante V14_MMC pulvermetallurgisch erzeugte Halbzeuge wiesen nach einer in der voranstehend für die Beispiele V15_a und V15_MMC_a ebenfalls bereits erläuterten Weise (Austenitisierung bei 1125 °C über 60 min; Abschrecken mit mit 3,5 bar beaufschlagtem N₂-Gas) durchgeführten Härtung im Mittel eine Härte von 66,0 HRC (Variante V14) und 67 HRC (Variante V14_MMC) auf. Nach einer in der voranstehend für die Beispiele V15_a und V15_MMC_a bereits ebenso erläuterten Weise (Anlassen bei 500 °C über 90 min, einmal wiederholt) durchgeführten Anlassbehandlung besaßen die aus den Varianten V14 und V14_MMC bestehenden Halbzeuge dann im Mittel eine Härte von 62,5 HRC (Variante V14) und 64,5 HRC (Variante V14_MMC).

Des Weiteren sind in der voranstehend erläuterten Weise aus den Varianten V14 und V14_MMC pulvermetallurgisch erzeugte Halbzeug-Proben einem Weichglühen über 8 Stunden bei 500 °C unterzogen worden. Im Mittel betrug die Härte nach dem Weichglühen 44 HRC (Variante V14) und 46 HRC (Variante V14_MMC).

Für eine härtere Variante V16 und V16_MMC sind der C-Gehalt jeweils im Bereich von 4,5 - 4,9 Gew.-% und der V-Gehalt im Bereich von 15,5 - 16,5 Gew.% eingestellt worden. Hier wiesen in der voranstehend für die Beispiele V15_a und V15_MMC_a erläuterten Weise aus der Variante V16 und der Variante V16_MMC pulvermetallurgisch erzeugte Halbzeuge nach einer in der voranstehend für die Beispiele V15_a und V15_MMC_a bereits erläuterten Weise durchgeführten Härtung (Austenitisierung bei 1125 °C über 60 min; Abschrecken mit 3,5 bar beaufschlagtem N₂-Gas) im Mittel eine Härte von 69,0 HRC (Variante V16) und 69,5 HRC (Variante V16_MMC) auf. Nach einer in der ebenfalls voranstehend für die Beispiele V15_a und V15_MMC_a bereits erläuterten Weise (Anlassen bei 500 °C über 90 min, einmal wiederholt) durchgeführten Anlassbehandlung besaßen die aus den Varianten V16 und V16_MMC bestehenden Halbzeuge dann im Mittel eine Härte von 65,5 HRC (Variante V16) und 66,5 HRC (Variante V16_MMC).

Schließlich sind auch in der voranstehend erläuterten Weise aus den Varianten V16 und V16_MMC pulvermetallurgisch erzeugte Halbzeug-Proben einem Weichglühen über 8 Stunden bei 500 °C unterzogen worden. Im Mittel betrug die Härte nach dem Weichglühen 47,5 HRC (Variante V16) und 52,0 HRC (Variante V16_MMC).

Die Erfindung stellt somit einen Stahlwerkstoff bereit, der eine für die Herstellung von Bauteilen, die im praktischen Einsatz hohen mechanischen, korrosiven, thermischen und abrasiven Belastungen ausgesetzt sind, optimierte Eigenschaftskombination bietet. Hierzu ist der erfindungsgemäße Stahlwerkstoff pulvermetallurgisch hergestellt und besteht aus (in Gew.-%): C: 3,9 - 5,0 %, Si: 0,3 - 2,0 %, Mn: 0,3 - 2,0 %, P: 0 - <0,035 %, S: 0 - <0,35 %, N: 0 - <0,12 %, Cr: 11,0 - 15,0 %, Mo: 0,5 - 2,0 %, V: 13,5 - 16,5 %, jeweils optional einem oder mehreren Elementen aus der Gruppe "Nb, Ni, Co, W", wobei der Gehalt an Elementen "Ni, Co, W" jeweils höchstens 1,0 % und der Gehalt an Nb höchstens 2,0 % beträgt, und als Rest aus Eisen und unvermeidbaren Verunreinigungen enthält, wobei in der so zusammengesetzten Stahlmatrix bis zu 30 Gew.-% Hartstoffpartikel vorhanden sein können. Aus einem derart legierten Stahllegierungspulver wird durch ein Sinterverfahren oder ein additives Verfahren ein festes Halbzeug gebildet, das dann zum jeweiligen Bauteil fertig bearbeitet wird.

**Tabelle 1**

| Stahl | **C** | **Si** | **Mn** | **Cr** | **Mo** | **V** | **TiC** |
|---|---|---|---|---|---|---|---|
| | [Gew.-%] | | | | | | |
| **V15** | 4,5 | 1,2 | 1,2 | 13,0 | 1,2 | 15,0 | - |
| **V15_MMC** | 4,5 | 1,2 | 1,2 | 13,0 | 1,2 | 15,0 | 5,0 |

| | | | | | | | |
|---|---|---|---|---|---|---|---|
| *) Rest Eisen und unvermeidbare Verunreinigungen | | | | | | | |

**Tabelle 2**

| Probe | AT | HRC_v Mittel | ST | St | HRC_n Mittel |
|---|---|---|---|---|---|
| | [°C] | | [°C] | [min] | |
| V15_a | 1125 | 68,0 | 500 | 2 x 90 | 64,0 |
| V15_b | - | - | ¹⁾ | ¹⁾ | 46,5 |
| V15_MMC_a | 1125 | 68,5 | 500 | 2 x 90 | 65,5 |
| V15_MMC_b | - | - | ¹⁾ | ¹⁾ | 49,0 |

| | | | | | |
|---|---|---|---|---|---|
| ¹⁾ Weichglühen (s. Text) | | | | | |

## Patentansprüche

1. Stahlwerkstoff, der pulvermetallurgisch hergestellt ist und wie folgt zusammengesetzt ist (in Gew.-%):
| | | | |
|---|---|---|---|
| C: | 3,9 | - | 5,0 %, |
| Si: | 0,3 | - | 2,0 %, |
| Mn: | 0,3 | - | 2,0 %, |
| P: | 0 | - | <0,035 %, |
| S: | 0 | - | <0,35 %, |
| N: | 0 | - | <0,12 %, |
| Cr: | 11,0 | - | 15,0 %, |
| Mo: | 0,5 | - | 2,0 %, |
| V: | 13,5 | - | 16,5 %, |
jeweils optional ein Element oder mehrere Elemente aus der Gruppe "Nb, Ni, Co, W", wobei der Gehalt an Elementen "Ni, Co, W" jeweils höchstens 1,0 % und der Gehalt an Nb höchstens 2,0 % beträgt,
Rest Eisen und unvermeidbare Verunreinigungen,
wobei in der so zusammengesetzten Stahlmatrix optional Hartstoffpartikel in Gehalten von bis zu 30 Gew.-% vorhanden sind.

2. Stahlwerkstoff nach Anspruch 1, **dadurch gekennzeichnet, dass** sein C-Gehalt mindestens 4,2 Gew.-% oder höchstens 4,6 Gew.-% beträgt.

3. Stahlwerkstoff nach einem der voranstehenden Ansprüche, **dadurch gekennzeichnet, dass** sein Si-Gehalt mindestens 0,7 Gew.-% oder höchstens 1,5 Gew.-% beträgt.

4. Stahlwerkstoff nach einem der voranstehenden Ansprüche, **dadurch gekennzeichnet, dass** sein Mn-Gehalt mindestens 0,7 Gew.-% oder höchstens 1,5 Gew.-% beträgt.

5. Stahlwerkstoff nach einem der voranstehenden Ansprüche, **dadurch gekennzeichnet, dass** sein S-Gehalt mindestens 0,035 Gew.-% beträgt.

6. Stahlwerkstoff nach einem der voranstehenden Ansprüche, **dadurch gekennzeichnet, dass** sein Cr-Gehalt mindestens 12,5 Gew.-% oder höchstens 13,5 Gew.-% beträgt.

7. Stahlwerkstoff nach einem der voranstehenden Ansprüche, **dadurch gekennzeichnet, dass** sein Mo-Gehalt mindestens 0,9 Gew.-% oder höchstens 1,5 Gew.-% beträgt.

8. Stahlwerkstoff nach einem der voranstehenden Ansprüche, **dadurch gekennzeichnet, dass** sein V-Gehalt mindestens 14,5 Gew.-% oder höchstens 15,5 Gew.-% beträgt.

9. Stahlwerkstoff nach einem der voranstehenden Ansprüche, **dadurch gekennzeichnet, dass** bei Anwesenheit eines Elements oder mehrerer Elemente aus der Gruppe "Ni, Co, W" für die Gehalte des jeweiligen Elements Ni, Co oder W gilt (in Gew.-%):
| | | | |
|---|---|---|---|
| Ni: | 0,2 | - | 0,4 %, |
| Co: | 0,3 | - | 0,5 %, |
| W: | 0,3 | - | 0,5 %. |

10. Stahlwerkstoff nach einem der voranstehenden Ansprüche, **dadurch gekennzeichnet, dass** sein Gehalt an Hartstoffpartikeln mindestens 2,5 Gew.-% beträgt.

11. Stahl nach einem der voranstehenden Ansprüche, **dadurch gekennzeichnet, dass** die Hartstoffpartikel in einer mittleren Korngröße von höchstens 50 µm vorliegen.

12. Verfahren zur Herstellung eines Bauteils, das aus einem gemäß einem der voranstehenden Ansprüche beschaffenen Stahl besteht, umfassend folgende Arbeitsschritte:
a) Es wird ein Stahllegierungspulver bereitgestellt, das aus (in Gew.-%) 3,9 - 5,0 % C, 0,3 - 2,0 % Si, 0,3 - 2,0 % Mn, < 0,035 % P, < 0,35 % S, < 0,12 % N, 11,0 -15,0 % Cr, 0,5 - 2,0 % Mo, 13,5 - 16,5 % V, jeweils optional ein Element oder mehrere Elemente aus der Gruppe "Nb, Ni, Co, W", wobei der Gehalt an Elementen "Ni, Co, W" jeweils höchstens 1,0 % und der Gehalt an Nb höchstens 2,0 % beträgt, und als Rest aus Eisen und unvermeidbaren Verunreinigungen besteht.
b) Optional wird das Stahllegierungspulver mit Hartstoffpartikeln mit der Maßgabe vermischt, dass der Gehalt an Hartstoffpartikeln an der erhaltenen Stahllegierungspulver-Hartstoffpartikel-Mischung bis zu 30 Gew.-% beträgt.
c) Optional wird das Stahllegierungspulver oder die Stahllegierungspulver-Hartstoff-Mischung getrocknet.
d) Aus dem Stahllegierungspulver oder der Stahllegierungspulver-Hartstoff-Mischung wird durch ein Sinterverfahren, insbesondere durch Heiß-Isostatisches-Pressen, oder durch ein additives Verfahren ein festes Halbzeug gebildet.
e) Das erhaltene Halbzeug wird zu dem Bauteil fertig bearbeitet.

13. Verfahren nach Anspruch 12, **dadurch gekennzeichnet, dass** für den Arbeitsschritt a) die Legierungsbestandteile des Stahllegierungungspulvers jeweils einzeln pulverförmig bereitgestellt und zu dem Stahllegierungspulvern vermischt werden.

14. Verfahren nach einem der Ansprüche 12 oder 13, **dadurch gekennzeichnet, dass** das Fertigbearbeiten (Arbeitsschritt e)) ein spanabhebendes Bearbeiten des Halbzeugs umfasst.

15. Bauteil, das im praktischen Einsatz Bewegungen mit hoher Beschleunigung oder Geschwindigkeit ausführt, hergestellt aus einem gemäß einem der Ansprüche 1 bis 11 beschaffenen Stahl.

## Claims

1. Steel material that is produced via powder metallurgy and is composed as follows (in wt%):
| | | | |
|---|---|---|---|
| C: | 3.9 | - | 5.0%, |
| Si: | 0.3 | - | 2.0% |
| Mn: | 0.3 | - | 2.0% |
| P: | 0 | - | <0.035% |
| S: | 0 | - | <0.35% |
| N: | 0 | - | <0.12% |
| Cr: | 11.0 | - | 15.0% |
| Mo: | 0.5 | - | 2.0% |
| V: | 13.5 | - | 16.5% |
optionally one element or a plurality of elements from the group "Nb, Ni, Co, W", wherein the content of elements "Ni, Co, W" respectively is at most 1.0% and the content of Nb is at most 2.0%,
residue consisting of iron and unavoidable impurities,
wherein hard material particles are present in contents of up to 30 wt% in the steel matrix thus composed.

2. Steel material according to claim 1, **characterised in that** its C content is at least 4.2 wt% or at most 4.6 wt%.

3. Steel material according to any one of the preceding claims, **characterised in that** its Si content is at least 0.7 wt% or at most 1.5 wt%.

4. Steel material according to any one of the preceding claims, **characterised in that** its Mn content is at least 0.7 wt% or at most 1.5 wt%.

5. Steel material according to any one of the preceding claims, **characterised in that** its S content is at least 0.035 wt%.

6. Steel material according to any one of the preceding claims, **characterised in that** its Cr content is at least 12.5 wt% or at most 13.5 wt%.

7. Steel material according to any one of the preceding claims, **characterised in that** its Mo content is at least 0.9 wt% or at most 1.5 wt%.

8. Steel material according to any one of the preceding claims, **characterised in that** its V content is at least 14.5 wt% or at most 15.5 wt%.

9. Steel material according to any one of the preceding claims, **characterised in that** in the presence of one element or a plurality of elements from the group "Ni, Co, W", the following applies (in wt%) for the contents of the respective element Ni, Co or W:
| | |
|---|---|
| Ni: | 0.2 - 0.4% |
| Co: | 0.3 - 0.5% |
| W: | 0.3 - 0.5% |

10. Steel material according to any one of the preceding claims, **characterised in that** its content of hard material particles is at least 2.5 wt%.

11. Steel material according to any one of the preceding claims, **characterised in that** the hard material particles are present in an average grain size of at most 50 µm.

12. Method for producing a component that consists of a steel obtained according to any one of the preceding claims, comprising the following work steps:
a) A steel alloy powder is provided that consists (in wt%) of 3.9 - 5.0% C, 0.3 - 2.0% Si, 0.3-2.0% Mn, <0.035% P, <0.35% S, <0.12% N, 11.0-15.0% Cr, 0.5 - 2.0% Mo, 13.5 - 16.5% V, optionally one element or a plurality of elements from the group "Nb, Ni, Co, W", wherein the content of elements "Ni, Co, W" respectively is at most 1.0% and the content of Nb is at most 2.0% and the residue consists of iron and unavoidable impurities.
b) The steel alloy powder is optionally mixed with hard material particles subject to the condition that the hard material particle content of the steel alloy powder/hard material particle mixture obtained is up to 30 wt%.
c) The steel alloy powder or the steel alloy powder/hard material mixture is optionally dried.
d) A solid semi-finished product is formed from the steel alloy powder or the steel alloy powder/hard material mixture by a sintering process, in particular by hot isostatic pressing or by an additive process.
e) The semi-finished product obtained is finished to form the component.

13. Method according to claim 12, **characterised in that** for the work step a), the alloy constituents of the steel alloy powder are provided individually in powder form and are mixed into the steel alloy powder.

14. Method according to claim 12 or 13, **characterised in that** the finishing work (work step e)) comprises machining the semi-finished product.

15. Component that performs movements with high acceleration or speed during practical use, produced from a steel obtained according to any one of claims 1 to 11.

## Revendications

1. Matériau à base d'acier qui est fabriqué par métallurgie des poudres et qui présente la composition suivante (en % massiques) :
| | |
|---|---|
| C : | 3,9 - 5,0 %, |
| Si : | 0,3 - 2,0 %, |
| Mn : | 0,3 - 2,0 %, |
| P : | 0 - < 0,035 %, |
| S : | 0 - < 0,35 %, |
| N : | 0 - < 0,12 %, |
| Cr : | 11,0 - 15,0 %, |
| Mo : | 0,5 - 2,0 %, |
| V : | 13,5 - 16,5 %, |
respectivement en option un élément ou plusieurs éléments du groupe « Nb, Ni, Co, W », la teneur en les éléments « Ni, Co, W » étant respectivement au maximum de 1,0 % et la teneur en Nb au maximum de 2,0 %,
le reste étant du fer et des impuretés inévitables, des particules de matière dure dans des teneurs maximales de 30 % massiques étant optionnellement présentes dans la matrice d'acier ainsi composée.

2. Matériau à base d'acier selon la revendication 1, **caractérisé en ce que** sa teneur en C est au minimum de 4,2 % massiques ou au maximum de 4,6 % massiques.

3. Matériau à base d'acier selon l'une des revendications précédentes, **caractérisé en ce que** sa teneur en Si est au minimum de 0,7 % massique ou au maximum de 1,5 % massique.

4. Matériau à base d'acier selon l'une des revendications précédentes, **caractérisé en ce que** sa teneur en Mn est au minimum de 0,7 % massique ou au maximum de 1,5 % massique.

5. Matériau à base d'acier selon l'une des revendications précédentes, **caractérisé en ce que** sa teneur en S est au minimum de 0,035 % massique.

6. Matériau à base d'acier selon l'une des revendications précédentes, **caractérisé en ce que** sa teneur en Cr est au minimum de 12,5 % massiques ou au maximum de 13,5 % massiques.

7. Matériau à base d'acier selon l'une des revendications précédentes, **caractérisé en ce que** sa teneur en Mo est au minimum de 0,9 % massique ou au maximum de 1,5 % massique.

8. Matériau à base d'acier selon l'une des revendications précédentes, **caractérisé en ce que** sa teneur en V est au minimum de 14,5 % massiques ou au maximum de 15,5 % massiques.

9. Matériau à base d'acier selon l'une des revendications précédentes, **caractérisé en ce qu'**en présence d'un élément ou de plusieurs éléments du groupe « Ni, Co, W », les teneurs en les éléments Ni, Co ou W respectifs (en % massique) sont définies comme suit :
| | |
|---|---|
| Ni | : 0,2 - 0,4 %, |
| Co : | 0,3 - 0,5 %, |
| W : | 0,3 - 0,5 %. |

10. Matériau à base d'acier selon l'une des revendications précédentes, **caractérisé en ce que** sa teneur en particules de matière dure est au minimum de 2,5 % massiques.

11. Matériau à base d'acier selon l'une des revendications précédentes, **caractérisé en ce que** les particules de matière dure sont présentes avec une taille moyenne de grain maximale de 50 µm.

12. Procédé de fabrication d'une pièce, laquelle se compose d'un acier constitué selon l'une des revendications précédentes, comprenant les étapes suivantes :
a) fourniture d'une poudre d'alliage d'acier, laquelle se compose de (en % massiques) 3,9 à 5,0 % de C, 0,3 à 2,0 % de Si, 0,3 à 2,0 % de Mn, < 0,035 % de P, < 0,35 % de S, < 0,12 % de N, 11,0 à 15,0 % de Cr, 0,5 à 2,0 % de Mo, 13,5 à 16,5 % de V, respectivement en option un élément ou plusieurs éléments du groupe « Nb, Ni, Co, W », la teneur en les éléments « Ni, Co, W » étant respectivement au maximum de 1,0 % et la teneur en Nb au maximum de 2,0 %, et comme reste du fer et des impuretés inévitables,
b) en option, la poudre d'alliage d'acier est mélangée avec des particules de matière dure avec pour indication que la teneur en particules de matière dure dans le mélange de poudre d'alliage d'acier et de particules de matière dure obtenu est au maximum de 30 %,
c) en option, la poudre d'alliage d'acier ou le mélange de poudre d'alliage d'acier et de matière dure est séché,
d) un produit semi-fini solide est formé à partir de la poudre d'alliage d'acier ou du mélange de poudre d'alliage d'acier et de matière dure par un procédé de frittage, notamment par compression isostatique à chaud, ou par un procédé additif,
e) le produit semi-fini obtenu est usiné pour obtenir l'élément structural fini.

13. Procédé selon la revendication 12, **caractérisé en ce que** pour l'étape a), les composantes d'alliage de la poudre d'alliage d'acier sont respectivement fournies individuellement sous forme de poudre et mélangées pour obtenir la poudre d'alliage d'acier.

14. Procédé selon l'une des revendications 12 ou 13, **caractérisé en ce que** l'usinage final (étape e)) comprend un usinage par enlèvement de copeaux du produit semi-fini.

15. Pièce qui, en utilisation pratique, accomplit des mouvements avec une accélération ou une vitesse élevée, fabriquée à partir d'un acier constitué selon l'une des revendications 1 à 11.
